# EUROPEAN PATENT APPLICATION

(11) **EP 2 362 290 A1**
(43) Date of publication of application: **31.08.2011**
(21) Application number: 10154754.5
(22) Date of filing: 25.02.2010
(51) Int. Cl.: G05D 23/13

(54) **Temperature controlling valve**

(71) Applicant: Globe Union Industrial Corp., Taichung (TW)
(72) Inventor: Chang, Chunghsiang, Taichung (TW)
(74) Representative: Chaillot, Geneviève

(57) **Abstract**

A temperature controlling valve includes a base; a housing installed to the base; a valve core limited to rotate in the housing and actuated to move upward and downward axially so that between communicating and overlapping portions of a second bore and a first bore is defined a cross sectional area to flow hot water, between communicating and overlapping portions of a second orifice and a first orifice is defined a cross sectional area to flow cold water, such that the cross sectional area to flow the hot water becomes increased or decreased with the change of the cross sectional area to flow the cold water, thus adjusting a mixed rate of the hot and the cold waters to obtain a predetermined temperature; a rotating element actuated by a driving motor to rotate at an original position to further actuate the valve core to move.

## Description

### BACKGROUND OF THE INVENTION

### Field of the Invention

The present invention relates to a temperature controlling valve that is adapted for a digital showering system to control a temperature of mixed hot and cold water, obtaining a desired showering temperature.

### Description of the Prior Art

Conventional temperature controlling valve is controlled in a disc rotating manner, and includes two rotary discs opposite to each other and two elongated holes to flow cold and hot waters respectively, and when one rotary disc rotates relative to another rotary disc, an inverse relationship exists between the cross sectional area of a first bore to flow hot water and the cross sectional area of a first orifice to flow cold water so as to become increased or decreased relatively, controlling cold-water and hot-water flowing amount to obtain a desired temperature. The rotary discs are driven by a driving motor, wherein they are forced equally to engage with each other tightly, thereby preventing water from leak. However, such an operation will cause a large friction resistance when rotating the two rotary discs. To overcome the friction resistance, a driving motor with high torque output is adapted for the temperature controlling valve at high cost and in a large size.

Furthermore, the conventional temperature controlling valve can not be used to control temperature precisely, because the rotating travel of the rotary disc is limited within 180 degrees of circumferential angle. Therefore, when the driving motor actuates the temperature controlling valve to rotate directly, an output shank of the driving motor is limited to rotate within a half-circle rotating travel, and the driving motor capable of being rotated toward a desired angle precisely is required. But such a precious driving motor is high-cost and larger-size.

The present invention has arisen to mitigate and/or obviate the afore-described disadvantages.

### SUMMARY OF THE INVENTION

The primary object of the present invention is to provide a temperature controlling valve that is capable of overcoming the shortcomings of the conventional temperature controlling valve.

Another object of the present invention is to provide a temperature controlling valve that a general driving motor can replace the precious driving motor to lower the cost and size of the driving motor.

A temperature controlling valve in accordance with the present invention comprises:
a base including a peripheral wall, a first end wall, and a second end wall among which is defined a receiving groove; the peripheral wall includes two different axial positions to pass through a first tunnel for flowing hot water and a second tunnel for flowing cold water so as to further communicate with the receiving groove; the peripheral wall including a first passage arranged on one side thereof proximate to the second end wall to communicate with the receiving groove;
a housing limited in the receiving groove of the base and including a peripheral rim, among the peripheral rim and the peripheral wall of the base being defined a first external chamber to receive the hot water and to communicate with the first tunnel and defined a second external chamber to receive the cold water and to communicate with the second tunnel; the peripheral rim of the housing including at least one first bore to flow the hot water arranged thereon relative to the first external chamber, and including at least one first orifice to flow the cold water arranged thereon in relation to the second external chamber;
a valve core fitted to the housing and including an upper disc, a middle disc, and a lower disc; between the upper disc and the middle disc being defined a first internal chamber to receive the hot water; between the middle disc and the lower disc being defined a second internal chamber in the peripheral rim of the housing to receive the cold water; the middle disc including at least one first pore arranged thereon to communicate the first internal chamber with the second internal chamber; the lower disc including al least one second pore thereon to communicate the second internal chamber with the first passage; the first internal chamber communicating with the first bore to define a cross sectional area to flow the hot water; the second internal chamber communicating with the first orifice to define a cross sectional area to flow the cold water;
a rotating element pivoted on the first end wall of the base to move at an original position, and including a connecting portion and a screwing portion; the screwing portion allowing to actuate the valve core to move upward and downward so that the cross sectional area to flow the hot water becomes increased or decreased with the change of the cross sectional area to flow the cold water.

### BRIEF DESCRIPTION OF THE DRAWINGS

Fig. 1 is a perspective view showing a temperature controlling valve being installed to an outlet valve seat according to a preferred embodiment of the present invention;
Fig. 2 is a top plan view showing the temperature controlling valve being installed to the outlet valve seat according to the preferred embodiment of the present invention;
Fig. 3 is a perspective view showing the assembly of the temperature controlling valve according to the preferred embodiment of the present invention;;
Fig. 4 is a perspective showing the cross section of the assembly of the temperature controlling valve according to the preferred embodiment of the present invention;
Fig. 5 is a cross sectional view showing a part of the temperature controlling valve according to the preferred embodiment of the present invention;
Fig. 6 is a cross sectional view showing the assembly of an upper cover and a bearing of the temperature controlling valve according to the preferred embodiment of the present invention;
Fig. 7 is a perspective view showing the exploded components of most part of the temperature controlling valve according to the preferred embodiment of the present invention
Fig. 8 is a perspective view showing the assembly of a housing, a valve core, and a rotating element of the temperature controlling valve according to the preferred embodiment of the present invention;
Fig. 9 is a perspective view showing the cross section of the assembly of the housing, the valve core, and the rotating element of the temperature controlling valve according to the preferred embodiment of the present invention;
Fig. 10 is a perspective view showing the exploded components of the assembly of the housing, the valve core, and the rotating element of the temperature controlling valve according to the preferred embodiment of the present invention;
Fig. 11 is a side plan view showing the assembly of the housing of the temperature controlling valve according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

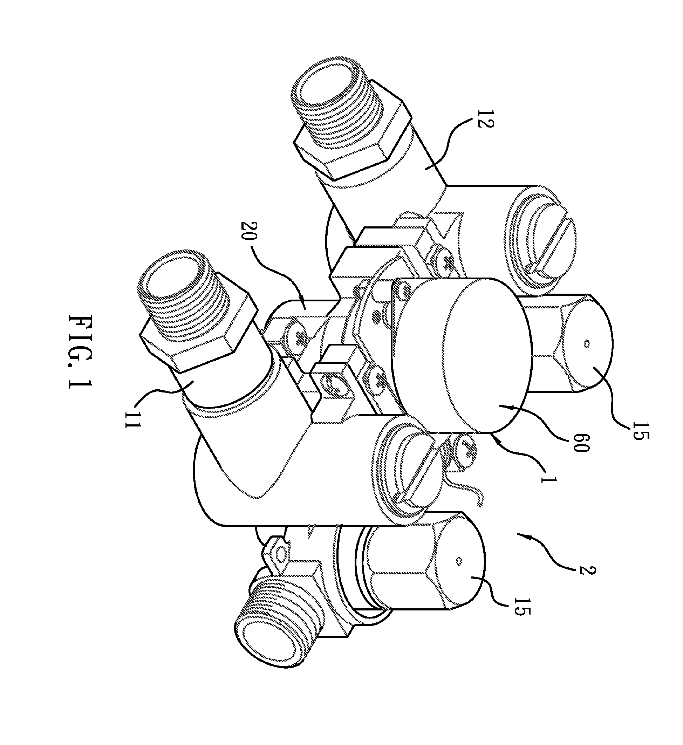

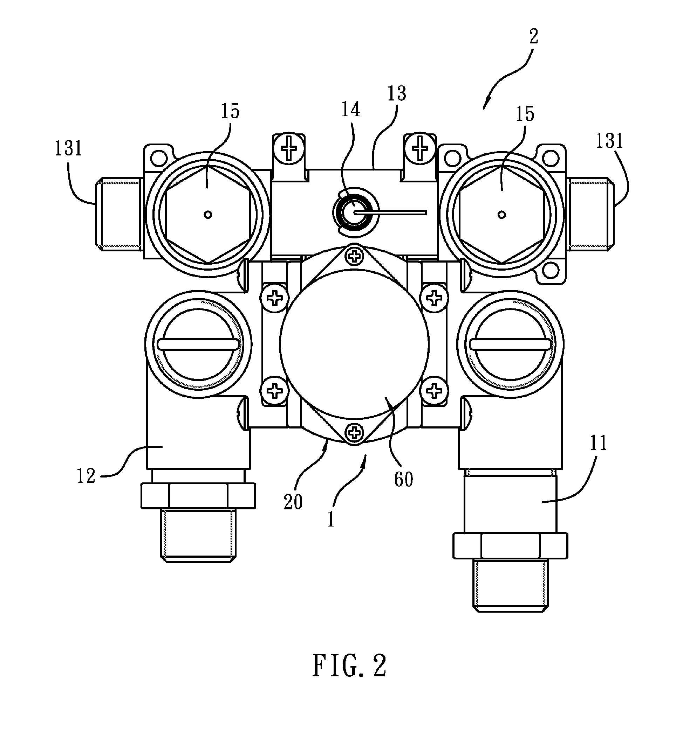

With reference to Figs. 1 and 2, a temperature controlling valve 1 according to a preferred embodiment of the present invention is applied in a digital showering system and installed to an outlet valve seat 2, the outlet valve seat 2 includes an first inlet piping 11 to receive cold water from a cold-water flowing piping and a second inlet piping 12 to flow hot water from a hot-water flowing piping, both of which are installed to an inlet end of the temperature controlling valve 1; an outlet piping 13 to receive mixed cold and hot water installed to an outlet end of the temperature controlling valve 1; a temperature sensor 14 installed in the outlet piping 13 to sense a temperature of the mixed cold and hot water so as to facilitate operation of the temperature valve 1; two solenoid valves 15 installed to two different outflow channels of the outlet piping 13 so as to control opening and closing of the outflow channels respectively. After the cold and the hot waters flow into the temperature controlling valve 1 through the first and the second inlet pipings 11 and 12, the cold and the hot waters are mixed together at a proper rate, and then the mixed cold and hot water flows to the outlet piping 13 to be controlled by the solenoid valves 15 so that the mixed cold and hot water flow out of an outlet 131 of the outlet piping 13, thereby supplying showering water.

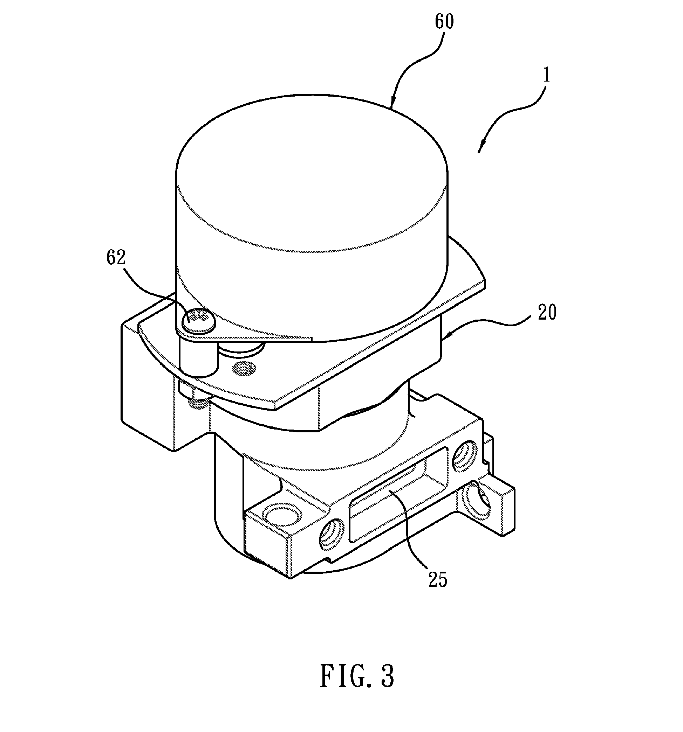

The temperature controlling valve 1 is used to adjust an inflow amount and a mixed rate of the cold and the hot waters automatically based on a temperature sensed by the temperature sensor 14 to control the temperature of the mixed cold and hot water. Most related components of the outlet valve seat 2 are well-known, accordingly further remarks are omitted. However, a different structure of the temperature controlling valve 1 of the present invention from that of the well-known temperature controlling valve is described as follows:
The temperature controlling valve 1, as shown in Figs. 3-5, includes a base 20, a housing 30, a valve core 40, a rotating element 50, and a driving motor 60.

The base 20 includes a peripheral wall 21, a first end wall 22, and a second end wall 23 among which is defined a receiving groove 201; the peripheral wall 21 includes two different axial positions, e.g., a higher axial position and a lower axial position to pass through a first tunnel 24 for flowing hot water and a second tunnel 25 for flowing cold water so as to further communicate with the receiving groove 201; the peripheral wall 21 includes a first passage 26 arranged on one side thereof proximate to the second end wall 23 to communicate with the receiving groove 201.

The base 20 further includes a body 20a and an upper housing 20b, the body 20a includes the peripheral wall 21 and the second end wall 23 formed therein to define a cylinder trench 202 which includes an opening attached on a top end of the cylinder trench 202; the peripheral wall 21 includes a stepped fence 211 fixed thereon proximate to the second end wall 23 and includes two limiting fences 212 below the stepped fence 211.

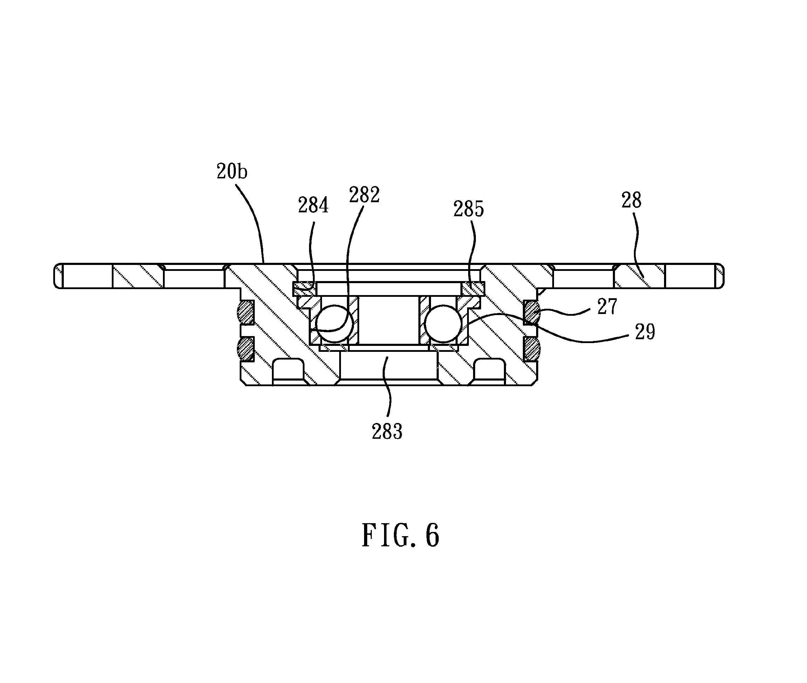

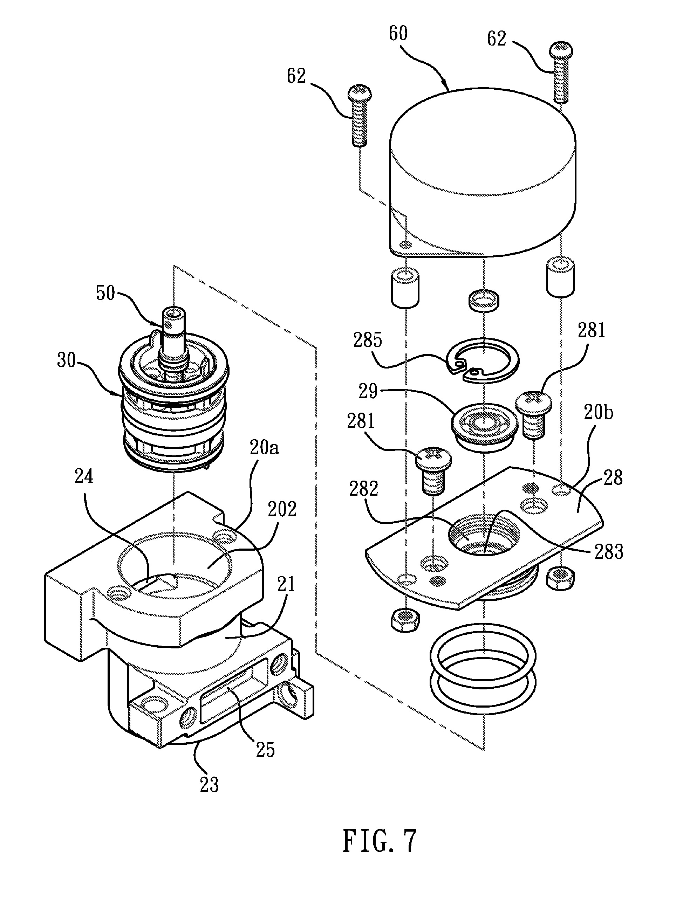

The upper cover 20b, as illustrated in Figs. 6 and 7, includes a plurality of first seal rings 27 retained thereon to engage with the peripheral wall 21 of the body 20a, and the first seal rings 27 includes a coupling wall 28 radially extending from a top end thereof to contact with the peripheral wall 21 of the body 20a, and includes a number of first bolts 281 to screw and cover the upper cover 20b onto the cylinder trench 202 of the body 20a and to define the receiving groove 201 with the body 20a.

The upper cover 20b includes a positioning slot 282 disposed at a central position of a top surface thereof, and the positioning slot 282 includes a first hole 283 mounted on a central position thereof, the upper cover 20b also includes a retaining slot 284 formed on a suitable position of an inner surface thereof to position a C-shaped retainer 285.

The positioning slot 282 of the upper cover 20b is used to receive a bearing 29, and the bearing 29 is retained in the positioning slot 282 by using the C-shaped retainer 285.

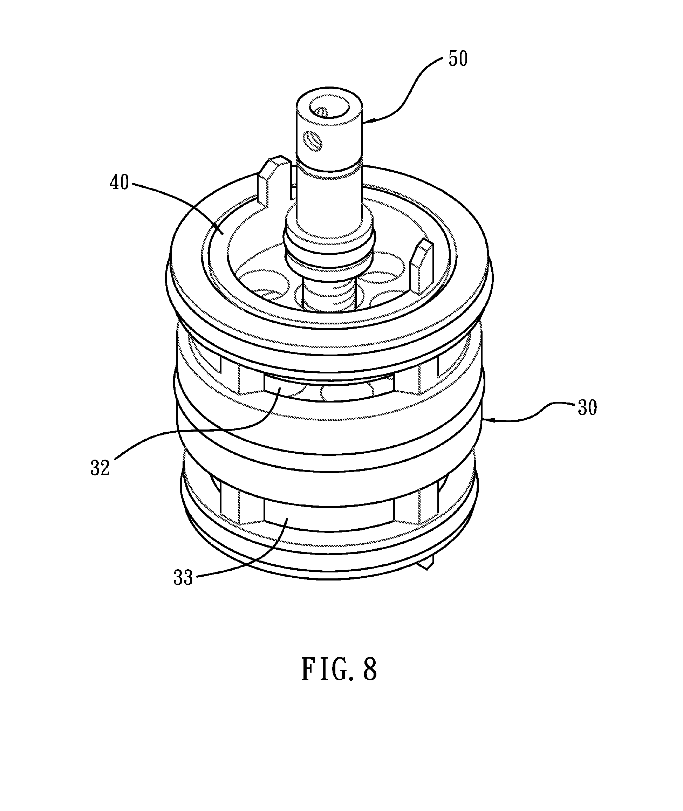

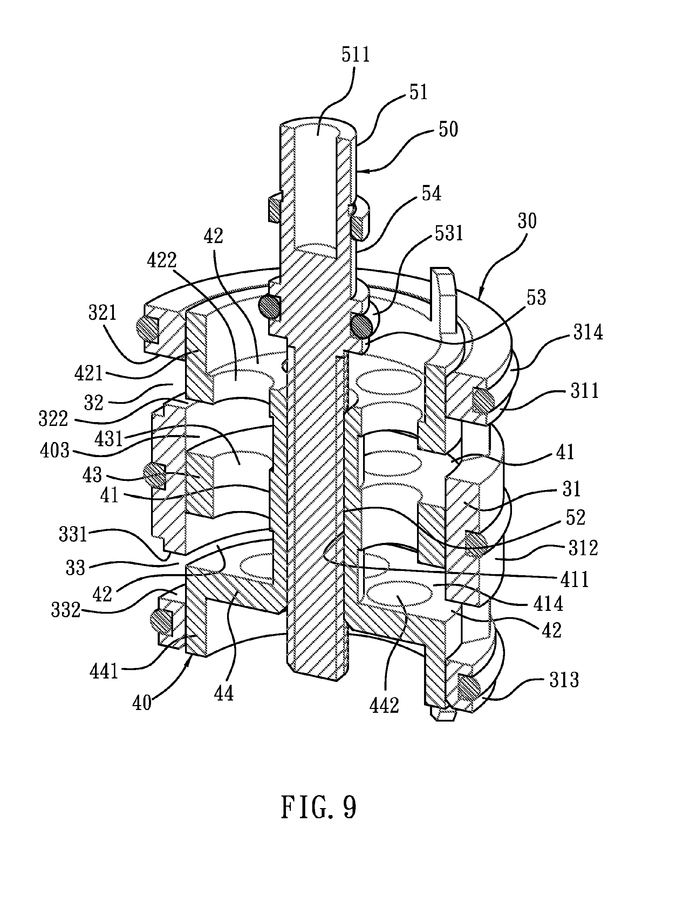

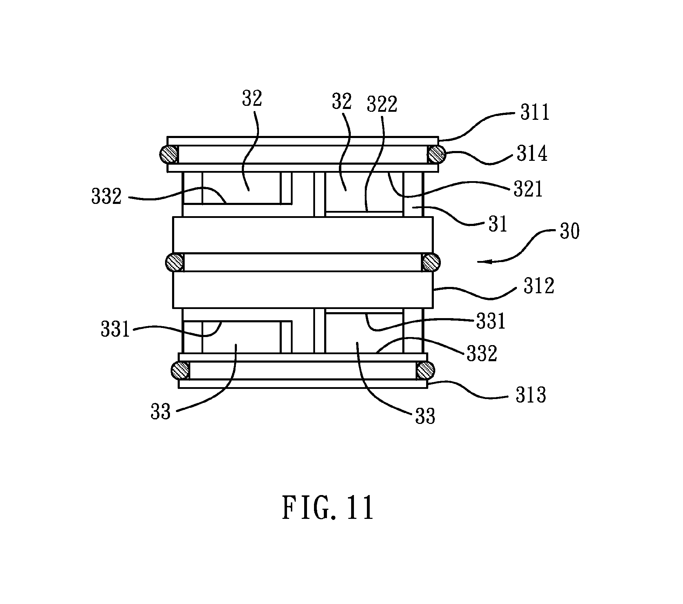

The housing 30, as shown in Figs. 8-11, is limited in the receiving groove 201 of the base 20, and includes a peripheral rim 31 having a first, a second, and a third annular projections 311, 312, 313, each of the first, the second, and the third annular projections 311, 312, 313 includes a second seal ring 314 retained thereon to engage with the peripheral wall 21 of the base 20 so that among the peripheral rim 31, the second seal ring 314 of the first annular projection 311, the second seal ring 314 of the second annular projection 312, and the peripheral wall 21 of the base 20 is defined a first external chamber 301 to receive the hot water and to communicate with the first tunnel 24, and among the peripheral rim 31 of the housing 30, the second seal ring 314 of the second annular projection 312, the second seal ring 314 of the third annular projection 313, and the peripheral wall 21 of the base 20 is defined a second external chamber 302 to communicate with the second tunnel 25.

A bottom end of the third annular projection 313 of the housing 30 is engaged with the stepped fence 211 of the peripheral wall 21 of the base 20, and a bottom end of the upper cover 20b is engaged with a top end of the first annular projection 311 so that the housing 30 is retained in the receiving groove 201 of the base 20.

The peripheral rim 31 of the housing 30 includes a plurality of first bores 32 to flow the hot water arranged around a circumferential direction thereof relative to the first external chamber 301 and spaced apart from each other evenly, and includes a number of first orifices 33 to flow the cold water arranged around a circumferential direction thereof in relation to the second external chamber 302 and spaced apart from each other equally.

First top edges 321 of the first bores 32 are located at the same axial height, and first bottom edges 322 of the first bores 32 are located at different axial heights; second top edges 331 of the first orifices 33 are located at different axial height, and second bottom edges 332 of the first orifices 33 are located at the same axial height.

The first bottom edges 322 and the second to edges 331 are formed by bottom and top end surfaces of stepped walls with different height. It is preferable that the first bottom edges 322 and the second to edges 331 are designed around a circumferential direction in a height increasing manner.

The valve core 40, as shown in Figs. 8-11, is fitted to the housing 30, and includes a screwed tube portion 41 secured at a center thereof, the valve core 40 also includes an upper disc 42, a middle disc 43, and a lower disc 44, all of which radially extends from an outer surface of the screwed tube portion 41 in order.

The screwed tube portion 41 includes a first screw aperture 411 extending axially in an interior thereof.

Between the upper disc 42 and the middle disc 43 is defined a second bore 401 to flow the hot water relative to the first bores 32; between the middle disc 43 and the lower disc 44 is defined a second orifice 402 to flow the cold water in relation to the first orifices 33; an axial width of the second orifice 402 is larger than that of the second bore 401.

The upper disc 42 includes a first shield 421 extending therefrom to contact with the peripheral rim 31 of the housing 30 and to close the first pore 32.

An outer peripheral surface of the middle disc 43 contacts with an inner peripheral surface of the peripheral rim 31 of the housing 30.

The lower disc 44 includes a second shield 441 extending from a bottom end thereof to contact with the peripheral rim 31 of the housing 30 and to close the first orifice 33.

Between the upper disc 42 and the middle disc 43 is defined a first internal chamber 403 to receive the hot water in the peripheral rim 31 of the housing 30 so that the first internal chamber 403 is in communication with the first external chamber 301 through the second bore 401 and the first bore 32, wherein between communicating and overlapping portions of the second bore 401 and the first bore 32 is defined a cross sectional area to flow the hot water.

Between the middle disc 43 and the lower disc 44 is defined a second internal chamber 404 in the peripheral rim 31 of the housing 30 so that the second internal chamber 404 is in communication with the second external chamber 302 via the second orifice 402 and the first orifice 33, wherein between communicating and overlapping portions of the second orifice 402 and the first orifice 33 is defined a cross sectional area to flow the cold water.

The middle disc 43 includes a plurality of first pores 431 arranged around a circumferential direction thereof and spaced apart from each other equally so that the first internal chamber 403 communicates with the second internal chamber 404. The lower disc 44 includes a number of second pores 442 arranged around a circumferential direction thereof and spaced apart from each other evenly so that the second internal chamber 404 communicates with the first passage 26.

It is preferable that the first pores 431 of the middle disc 43 are not axially opposite to the second pores 442 so that after the hot water from the first pores 431 flows into the second internal chamber 402, the hot water can not further flow out of the second internal chamber 402 linearly but flow out of the second internal chamber 402 in a curvedly flowing manner, such that the hot water is mixed with the cold water in the second internal chamber 404 more evenly.

The lower disc 44 of the valve core 40 includes two defining tabs 443 extending from a bottom end thereof to be retained on one side of the limiting fences 212 so that the valve core 40 can not rotate but be limited to move vertically in the housing 30.

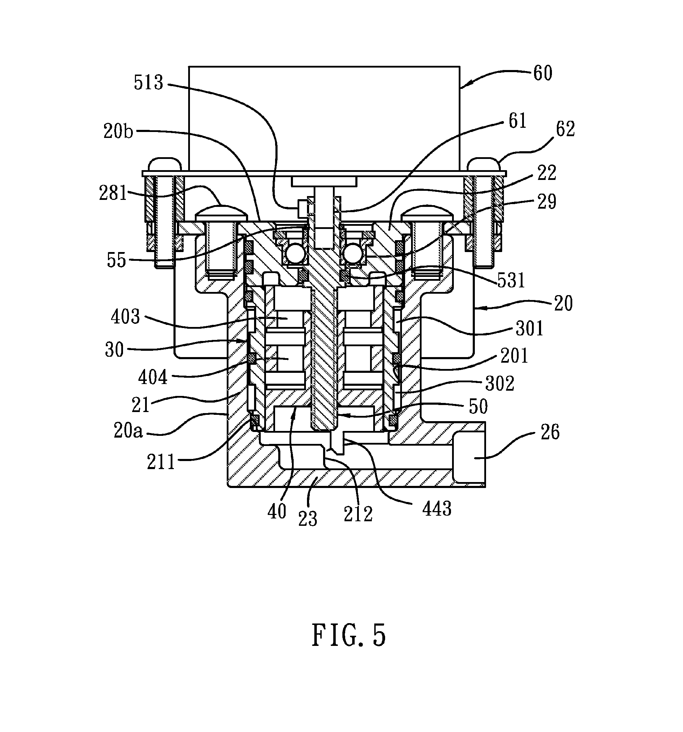

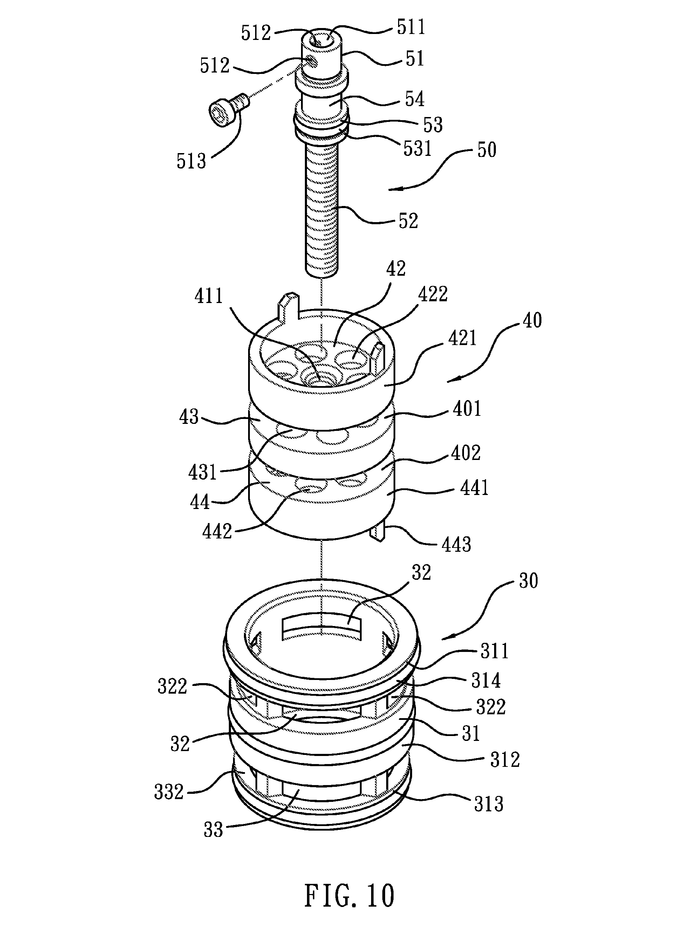

The rotating element 50, as illustrated in Figs. 5 and 10, is formed in a post shape and is pivoted on the first end wall 22 of the base 20 to move at an original position, and includes a connecting portion 51, a screwing portion 52, a projected portion 53 between the connecting portion 51 and the screwing portion 52, and a pivoting portion 45.

The rotating element 50 passes through the bearing 29, and the connecting portion 51 is located at an outer side of the bearing 29; the connecting portion 51 includes a fixing dent 511 formed on a distal end thereof, and two second screw apertures 512 radially passing through an inner surface thereof to inset and retain a retaining bolt 512 into the fixing dent 511.

The screwing portion 52 is substantially a screw shaft to screw with the first screw aperture 411 of the screwed tub portion 41 so as to actuate the valve core 40 to move upward and downward.

The projected portion 53 includes a third seal ring 531 retained thereon to engage with the first hole 283 of the upper cover 20b, and a top end of the projected portion 53 engages with a bottom end of the bearing 29.

The pivoting portion 54 is located between the projected portion 53 and the connecting portion 51 to insert through the bearing 29, the pivoting portion 51 of the rotating element 50 includes a locking member 55 disposed on an upper side thereof to retain the bearing 29 so that the rotating element 50 is limited axially to move at an original position.

The driving motor 60, as shown in Figs. 5 and 10, includes an output shank 61 to be inserted to the fixing dent 511 of the rotating element 511, and includes two abutting planes 611 mounted on an outer surface of a free end thereof to retain with the retaining bolt 513 so that the output shank 61 connects with the connecting portion 51 of the rotating element 50 to be actuated to rotate by the rotating element 50.

The driving motor 60 is screwed with the upper cover 20b by using a plurality of third bolts 62.

Because the first pores 431 and the second pores 442 of the valve core 40 are not aligned with each other axially and some hot water flows into an upper space of the upper disc 42 via a second hole 422, the related seal rings are used to prevent water from leak between the upper cover 20b and the rotating element 50 and between the upper cover 20b and the body 20a.

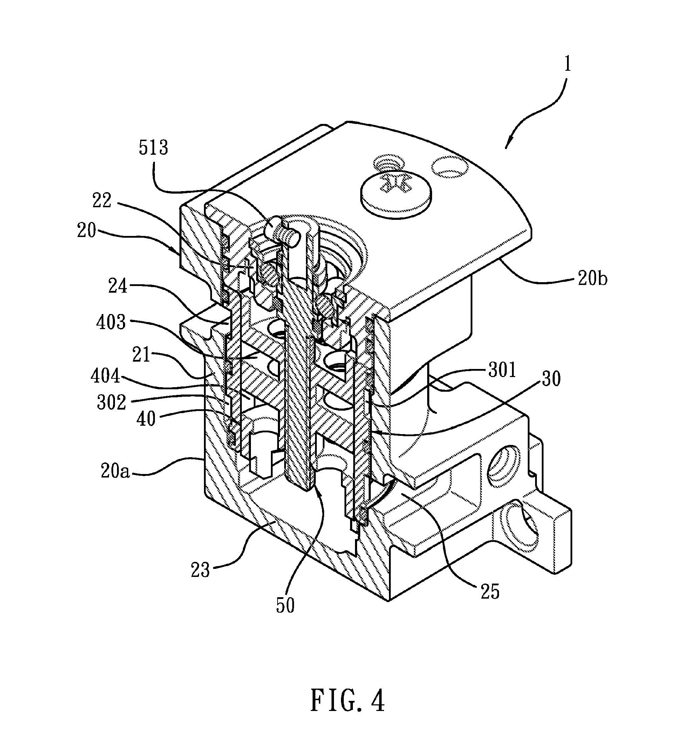

Referring to Figs. 4-5, the hot water flows into the first external chamber 301 from the first tunnel 24 through the first bores 32 of the housing 30 and the second bore 401 of the valve core 40, and then flows downward to the second internal chamber 404 via the first pores 431 of the middle disc 43; and the cold water flows into the second external chamber 302 through the second tunnel 25 and further flows to the second internal chamber 404 via the first orifices 33 and the second orifice 402 so that the cold water and the hot water mix together evenly in the second internal chamber 404. Thereafter, the mixed cold and hot water flows to the first passage 26 from the second pores 442 of the lower disc 44 to supply showering water.

Besides, the temperature sensor 14 senses a temperature of the mixed hot and cold water, and when the sensed temperature does not match with a set temperature, the driving motor 60 is started automatically to actuate the rotating element 50 to rotate the valve core 40 toward a predetermined axial direction so that the cross sectional area to flow the hot water becomes increased or decreased with the change of the cross sectional area to flow the cold water, thus adjusting a mixed rate of the hot and the cold waters to obtain a predetermined temperature.

It is to be noted that the housing 30 and the valve core 40 are slidably fitted together, therefore a contacting portion of the housing 30 and the valve core 40 are worked to form a smooth surface to lower friction resistance when the valve core 40 moves axially, hence a torque of the driving motor 60 is decreased greatly. For example, the torque of the driving motor 60 of the temperature controlling valve 1 of the present invention is lowered to 0.05N-M to diminish cost and occupied space of the driving motor 60.

Because the valve core 40 is screwedly actuated by the rotating element 50 to move axially, a pitch of a screwing structure between the valve core 40 and the rotating element 50 can be lowered so that a moving distance of the valve core 40 actuated by the rotating element 50 is decreased greatly to adjust the cross sectional areas to flow the hot and the cold waters precisely, hence the mixed rate of the hot and the cold waters is controlled accurately to enhance temperature controlling efficiency.

Furthermore, if an axially vertical moving travel of the valve core 40 is increased, the cross sectional areas to flow the hot and the cold waters allows to be adjusted so that the mixed rate of the hot and the cold waters is controlled exactly to control temperature efficiently. Therefore, an axial width of the first bores 32 and the first orifices 33 of the housing 30 has to be increased and an axial width of the second bore 401 and the second orifice 402 of the valve core 40 has to be raised.

When the pitch of the screwing structure between the valve core 40 and the rotating element 50 is lowered or the axially vertical moving travel of the valve core 40 is increased, a general driving motor can replace the precious driving motor 60 to lower the cost and size of the driving motor.

While we have shown and described various embodiments in accordance with the present invention, it is clear to those skilled in the art that further embodiments may be made without departing from the scope of the present invention.

## Claims

1. A temperature controlling valve comprising
a base including a peripheral wall, a first end wall, and a second end wall among which is defined a receiving groove; the peripheral wall includes two different axial positions to pass through a first tunnel for flowing hot water and a second tunnel for flowing cold water so as to further communicate with the receiving groove; the peripheral wall including a first passage arranged on one side thereof proximate to the second end wall to communicate with the receiving groove;
a housing limited in the receiving groove of the base and including a peripheral rim, among the peripheral rim and the peripheral wall of the base being defined a first external chamber to receive the hot water and to communicate with the first tunnel and defined a second external chamber to receive the cold water and to communicate with the second tunnel; the peripheral rim of the housing including at least one first bore to flow the hot water arranged thereon relative to the first external chamber, and including at least one first orifice to flow the cold water arranged thereon in relation to the second external chamber;
a valve core fitted to the housing and including an upper disc, a middle disc, and a lower disc; between the upper disc and the middle disc being defined a first internal chamber to receive the hot water; between the middle disc and the lower disc being defined a second internal chamber in the peripheral rim of the housing to receive the cold water; the middle disc including at least one first pore arranged thereon to communicate the first internal chamber with the second internal chamber; the lower disc including al least one second pore thereon to communicate the second internal chamber with the first passage; the first internal chamber communicating with the first bore to define a cross sectional area to flow the hot water; the second internal chamber communicating with the first orifice to define a cross sectional area to flow the cold water;
a rotating element pivoted on the first end wall of the base to move at an original position, and including a connecting portion and a screwing portion; the screwing portion allowing to actuate the valve core to move upward and downward so that the cross sectional area to flow the hot water becomes increased or decreased with the change of the cross sectional area to flow the cold water.

2. The temperature controlling valve as claimed in claim 1, wherein the base further includes a body and an upper cover; the body includes the peripheral wall and the second end wall of the base formed therein to define a cylinder trench which includes an opening attached on a top end of the cylinder trench; the upper cover is covered to the opening of the body to form the first end wall of the base, wherein the upper cover includes a first hole mounted on a central position thereof to insert the rotating element, and the connecting portion of the rotating element is located at an outer side of the first hole, the screwing portion is located at an inner side of the first hole.

3. The temperature controlling valve as claimed in claim 2, wherein the upper cover includes a positioning slot disposed at a top surface thereof to receive a bearing, and the rotating element passes through the bearing.

4. The temperature controlling valve as claimed in claim 2, wherein the upper cover includes a plurality of first seal rings retained thereon to engage with the peripheral wall of the body, and the first seal rings includes a coupling wall radially extending from a top end thereof to contact with the peripheral wall of the body.

5. The temperature controlling valve as claimed in claim 2, wherein the peripheral rim of the housing includes a first, a second, and a third annular projections, each of the first, the second, and the third annular projections includes a second seal ring retained thereon to engage with the peripheral wall of the base so that among the peripheral rim of the housing, the second seal ring of the first annular projection, the second seal ring of the second annular projection, and the peripheral wall of the base is defined the first external chamber, and among the peripheral rim of the housing, the second seal ring of the second annular projection, the second seal ring of the third annular projection, and the peripheral wall of the base is defined the second external chamber.

6. The temperature controlling valve as claimed in claim 5, wherein a bottom end of the third annular projection of the housing is engaged with a stepped fence of the peripheral wall of the base, and a bottom end of the upper cover is engaged with a top end of the first annular projection so that the housing is retained in the receiving groove of the base.

7. The temperature controlling valve as claimed in claim 1, wherein the peripheral rim of the housing includes a plurality of the first bores to flow the hot water arranged around a circumferential direction thereof and spaced apart from each other evenly, and includes a number of the first orifices to flow the cold water arranged around a circumferential direction thereof and spaced apart from each other equally.

8. The temperature controlling valve as claimed in claim 7, wherein top surfaces of the first bores are located at the same axial height, and bottom surfaces of the first bores are located at the same axial height; top surfaces of the first orifices are located at the same axial height, and bottom surfaces of the first orifices are located at the same axial height.

9. The temperature controlling valve as claimed in claim 7, wherein the top surfaces of the first bores are located at the same axial height, and the bottom surfaces of the first bores are located at different axial heights; the top surfaces of the first orifices are located at different axial heights, and the bottom surfaces of the first orifices are located at the same axial height

10. The temperature controlling valve as claimed in claim 1, wherein between the upper disc and the middle disc of the valve core is defined a second bore to flow the hot water relative to the first bores so that the first external chamber communicates with the first internal chamber through the first bores and the second bore; between the middle disc and the lower disc of the valve core is defined a second orifice to flow the cold water in relation to the first orifices so that the second external chamber communicates with the second internal chamber via the first orifice and the second orifice; an axial width of the second orifice is equal to that of the second bore.

11. The temperature controlling valve as claimed in claim 1, wherein between the upper disc and the middle disc of the valve core is defined a second bore to flow the hot water relative to the first bores so that the first external chamber communicates with the first internal chamber through the first bores and the second bore; between the middle disc and the lower disc of the valve core is defined a second orifice to flow the cold water in relation to the first orifices so that the second external chamber communicates with the second internal chamber via the first orifice and the second orifice; an axial width of the second orifice is larger than that of the second bore.

12. The temperature controlling valve as claimed in claim 1, wherein the valve core includes a screwed tube portion secured at a center thereof, and includes the upper disc, the middle disc, and the lower disc, all of which radially extends from an outer surface of the screwed tube portion in order; the screwed tube portion includes a first screw aperture extending axially in an interior thereof; the screwing portion is a screw shaft to screw with the first screw aperture of the screwed tub portion.

13. The temperature controlling valve as claimed in claim 11 further comprising a driving motor having an output shank which connects with the connecting portion of the rotating element to be actuated to rotate by the rotating element.

14. The temperature controlling valve as claimed in claim 1, wherein the peripheral wall of the base includes two limiting fences proximate to the second end wall; the lower disc of the valve core includes two defining tabs extending from a bottom end thereof to be retained on one side of the limiting fences so that the valve core can not rotate but be limited to move vertically in the housing.

15. The temperature controlling valve as claimed in claim 1, wherein the upper disc of the valve core includes a first shield extending therefrom to contact with the peripheral rim of the housing and to close the first pore; an outer peripheral surface of the middle disc contacts with an inner peripheral surface of the peripheral rim of the housing; the lower disc includes a second shield extending from a bottom end thereof to contact with the peripheral rim of the housing and to close the first orifice.

16. The temperature controlling valve as claimed in claim 1, wherein the middle disc includes a plurality of the first pores arranged around a circumferential direction thereof and spaced apart from each other equally.

17. The temperature controlling valve as claimed in claim 2, wherein the driving motor is screwed with the upper cover by using a plurality of third bolts.
